# EUROPEAN PATENT APPLICATION

(11) **EP 4 412 269 A1**
(43) Date of publication of application: **07.08.2024**
(21) Application number: 22874892.7
(22) Date of filing: 27.09.2022
(51) Int. Cl.: H04W 8/20

(54) **UE CAPABILITY CHANGE METHOD, TERMINAL, AND NETWORK SIDE DEVICE**

(30) Priority: 29.09.2021 CN 202111152508
(71) Applicant: Vivo Mobile Communication Co., Ltd., Dongguan, Guangdong 523863 (CN)
(72) Inventor: LIU, Xuanbing, Dongguan, Guangdong 523863 (CN); YANG, Xiaodong, Dongguan, Guangdong 523863 (CN)
(74) Representative: Lavoix
(86) International application number: PCT/CN2022/121623
(87) International publication number: WO 2023/051507

(57) **Abstract**

This application discloses a UE capability change method, a terminal, and a network-side device, and belongs to the technical field of wireless communications. The UE capability change method in embodiments of this application includes: determining, by UE, that a capability change is required and/or configuration preference; sending, by the UE, a first request message, where the first request message is used for requesting a network-side device for the capability change and/or is used for sending configuration preference; and executing, by the UE, corresponding processing based on a response of the network-side device.

## Description

### CROSS-REFERENCE TO RELATED APPLICATIONS

The present invention claims the priority of the Chinese patent application No. 202111152508.X, entitled "UE CAPABILITY CHANGE METHOD, TERMINAL, AND NETWORK-SIDE DEVICE" filed to the China Patent Office on September 29, 2021, the entire contents of which are incorporated herein by reference.

### TECHNICAL FIELD

This application belongs to the technical field of wireless communications, and in particular, relates to a UE capability change method, a terminal, and a network-side device.

### BACKGROUND

Multi-SIM terminals can reside on multiple networks simultaneously, and there are multiple implementation manners for multi-SIM terminals. Some multi-SIM terminals can transmit and receive data simultaneously on multiple networks without affecting each other. Some multi-SIM terminals, although capable of residing on multiple networks simultaneously, may adopt a time division mode to reside on two networks, that is, residing on a network A to monitor paging (paging) of the network A for a period of time, and residing on a network B to monitor paging of the network B for a period of time; or connecting to the network A to receive and transmit data for a period of time, and receiving paging on the network B for a period of time; and or receiving data on the network A for a period of time, and establishing a connection or receiving and transmitting data on the network B for a period of time. Some multi-SIM terminals that support dual transmission and dual reception can simultaneously transmit and receive data on multiple networks on specific frequency bands without affecting each other. On some other frequency bands, the time division mode may be adopted to receive and transmit data on two networks.

In specific application, a multi-SIM terminal may need to transfer from a network A to a network B to perform tasks. For multi-SIM terminals that support multiple transmissions (Tx) or multiple receptions (Rx), while residing or maintaining a connected state on a network A, it may be necessary to utilize part of the resources such as Tx or Rx paths to perform tasks on a network B. However, due to the current capability or configuration of the terminal on the network A, the user equipment (User Equipment, UE) may not be able to utilize part of the resources to meet the multi-SIM task requirements on the network B. In view of the situation, there is a lack of corresponding solutions in the prior art.

### SUMMARY

Embodiments of this application provide a UE capability change method, a terminal, and a network-side device, which can solve the problem that the current capability or configuration of a terminal cannot meet multi-SIM task requirements of the terminal.

In a first aspect, a UE capability change method is provided, which includes: determining, by UE, that a capability change is required and/or configuration preference; sending, by the UE, a first request message, where the first request message is used for requesting a network-side device for the capability change and/or is used for sending configuration preference; and executing, by the UE, corresponding processing based on a response of the network-side device.

In a second aspect, a UE capability change apparatus is provided, which includes: a determining module, configured to determine that UE requires a capability change and/or sends configuration preference; a first sending module, configured to send a first request message, where the first request message is used for requesting a network-side device for the capability change and/or is used for sending configuration preference; and an execution module, configured to execute corresponding processing based on a response of the network-side device.

In a third aspect, a UE capability change method is provided, which includes: receiving, by a network-side device, a first request message sent from UE, where the first request message is used for requesting a capability change and/or is used for sending configuration preference by the UE; and responding, by the network-side device, to the first request message.

In a fourth aspect, a UE capability change apparatus is provided, which includes: a second receiving module, configured to receive a first request message sent from UE, where the first request message is used for requesting a capability change and/or is used for sending configuration preference by the UE; and a response module, configured to respond to the first request message.

In a fifth aspect, a terminal is provided, and the terminal includes a processor, a memory, and a program or instruction stored in the memory and executable on the processor, the program or instruction, when executed by the processor, implements steps of the method according to the first aspect.

In a sixth aspect, a terminal is provided, which includes a processor and a communication interface, where the processor is configured to implement steps of the method according to the first aspect, and the communication interface is configured to communicate with a network-side device.

In a seventh aspect, a network-side device is provided, and the network-side device includes a processor, a memory, and a program or instruction stored in the memory and executable on the processor, the program or instruction, when executed by the processor, implements steps of the method according to the third aspect.

In an eighth aspect, a network-side device is provided, which includes a processor and a communication interface, where the processor is configured to implement steps of the method according to the third aspect, and the communication interface is configured to communicate with UE.

In a ninth aspect, a readable storage medium is provided, a program or instruction is stored on the readable storage medium, the program or instruction, when executed by a processor, implements the steps of the method according to the first aspect, or implements the steps of the method according to the third aspect.

In a tenth aspect, a chip is provided, and the chip includes a processor and a communication interface, the communication interface is coupled with the processor, and the processor is configured to execute a program or instruction to implement the steps of the method according to the first aspect, or to implement the steps of the method according to the third aspect.

In an eleventh aspect, a computer program/program product is provided, the computer program/program product is stored in a non-transient storage medium, and the program/program product is executed by at least one processor to implement the steps of the method according to the first aspect, or to implement the steps of the method according to the third aspect.

In the embodiments of this application, the UE sends the first request message to the network-side device for requesting the capability change and/or sending configuration preference in a case that the UE determines that a capability change is required and/or configuration preference, and the UE executes corresponding processing based on the response of the network-side device, so that the UE can request the capability change and/or send configuration preference in a case that the current capability or configuration of the UE may not meet multi-SIM task requirements of the UE.

### BRIEF DESCRIPTION OF THE DRAWINGS

FIG. 1 is a schematic diagram of a wireless communication system to which embodiments of this application can be applied;
FIG. 2 is a schematic flowchart of a UE capability change method according to an embodiment of this application;
FIG. 3 is another schematic flowchart of the UE capability change method according to an embodiment of this application;
FIG. 4 is still another schematic flowchart of the UE capability change method according to an embodiment of this application;
FIG. 5 is still another schematic flowchart of the UE capability change method according to an embodiment of this application;
FIG. 6 is still another schematic flowchart of the UE capability change method according to an embodiment of this application;
FIG. 7 is a schematic structural diagram of a UE capability change apparatus according to an embodiment of this application;
FIG. 8 is another schematic structural diagram of the UE capability change apparatus according to an embodiment of this application;
FIG. 9 is a schematic structural diagram of a communication device provided in an embodiment of this application;
FIG. 10 is a schematic diagram of a hardware structure of a terminal provided in an embodiment of this application; and
FIG. 11 is a schematic diagram of a hardware structure of a network-side device provided in an embodiment of this application.

### DETAILED DESCRIPTION

The technical solutions in the embodiments of this application are clearly described in the following with reference to the accompanying drawings in the embodiments. Apparently, the described embodiments are merely some rather than all of the embodiments of this application. All other embodiments obtained by those of ordinary skill in the art based on the embodiments of this application fall within the protection scope of this application.

In the description and claims of this application, the terms such as "first" and "second" are used for distinguishing similar objects, rather than describing a specific sequence or order. It is to be understood that the terms used in such a way are exchangeable in a proper case, so that the embodiments of this application can be implemented in an order different from those shown or described herein. The objects distinguished by "first" and "second" are usually of the same class, and the number of the objects is not limited, for example, the number of the first object may be one or multiple. In addition, in the description and claims, "and/or" indicates at least one of the connected objects, and the character "/" generally indicates that the associated objects are in an "or" relationship.

It is worth noting that the technology described in the embodiments of this application is not limited to long term evolution (Long Term Evolution, LTE)/LTE-advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency-division multiple access (Single-carrier Frequency-Division Multiple Access, SC-FDMA). The terms "system" and "network" in the embodiments of this application are often interchangeably used, and the described technology can be applied to the systems and radio technologies mentioned above, and can also be applied to other systems and radio technologies. The following describes a new radio (New Radio, NR) system as an example, and the NR term is used in most of the following descriptions. However, these technologies can also be applied to applications other than the NR system, e.g., the 6th generation (6^{th} Generation, 6G) communication system.

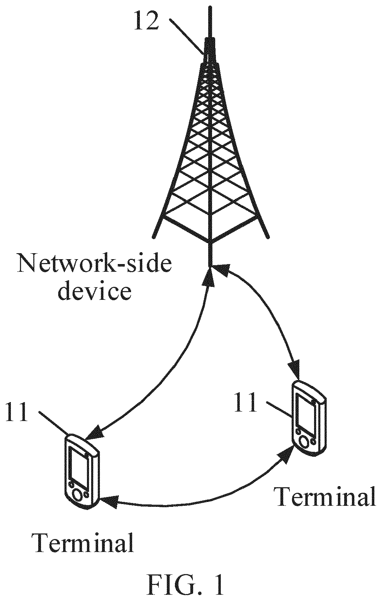

FIG. 1 is a schematic diagram of a wireless communication system to which the embodiments of this application can be applied. The wireless communication system includes a terminal 11 and a network-side device 12. The terminal 11 may also be referred to as a terminal device, and the terminal 11 may be a mobile phone, a tablet personal computer (Tablet Personal Computer), a laptop computer (Laptop Computer) or also known as a notebook computer, a personal digital assistant (Personal Digital Assistant, PDA), a handheld computer, a netbook, an ultra-mobile personal computer (Ultra-Mobile Personal Computer, UMPC), a mobile Internet device (Mobile Internet Device, MID), a wearable device (Wearable Device) or vehicle user equipment (VUE), pedestrian user equipment (PUE), and other terminal-side devices, where the wearable devices include: smart watches, wristbands, headphones, glasses, etc. It should be noted that the specific type of the terminal 11 is not limited in the embodiments of this application. The network-side device 12 may be a base station or core network, and the base station may be referred to as a NodeB, an evolved NodeB, an access point, a base transceiver station (Base Transceiver Station, BTS), a base radio station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRPs), or some other appropriate term in the art. As long as the same technical effect is achieved, the base station is not limited to specific technical terms. It should be noted that in the embodiments of this application, a base station in an NR system is taken only as an example, but the specific type of the base station is not limited.

The UE capability change method provided in the embodiments of this application will be described in detail below with reference to the accompanying drawings and through some embodiments and application scenarios thereof.

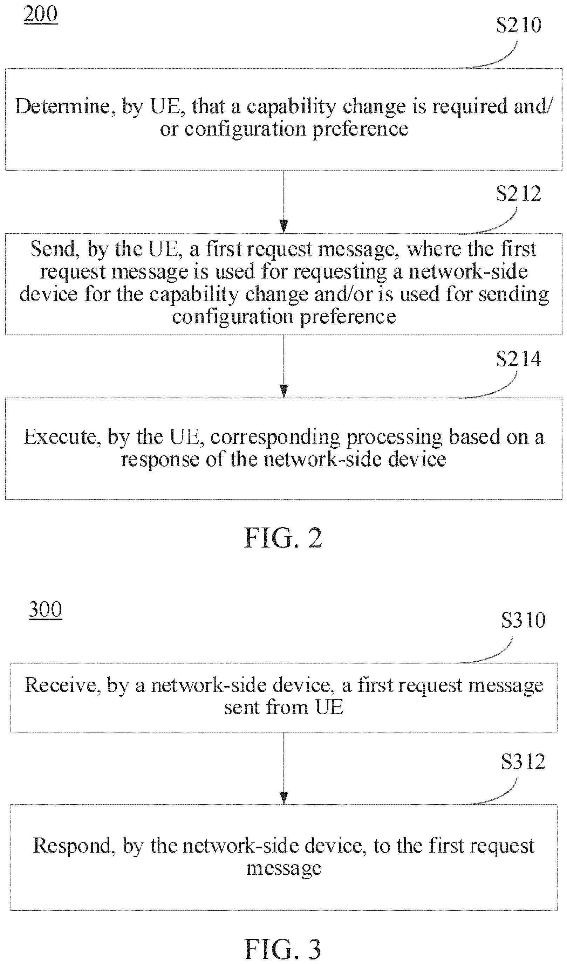

FIG. 2 is a schematic flowchart of a UE capability change method according to an embodiment of this application, and the method 200 may be executed by a terminal. In other words, the method may be executed by software or hardware installed on the terminal. As shown in FIG. 2, the method may include the following steps:
S210: UE determines that a capability change is required and/or configuration preference.

In this embodiment of this application, a multi-SIM terminal may include multiple pieces of UE, which are referred to as Multi-SIM UE. It should be noted that the UE may be considered as a contract party. Multiple contract parties can be configured on a terminal device. A contract party may be represented by a subscriber identity module (Subscriber Identity Module, SIM) card. One SIM card corresponds to a contract party of a network. The SIM card stores the identity of the contract party, that is, the UE identity, e.g., a subscription permanent identifier (Subscription Permanent Identifier, SUPI), or an international mobile subscription identity (International Mobile Subscription Identity, IMSI). Therefore, when multiple SIM cards are inserted or multiple pieces of electronic SIM card information are configured on a terminal, the terminal may form different UE with different contract parties.

In this embodiment of this application, the network-side device may initiate a capability transmission process to the UE in a connected state, thereby obtaining the wireless access capability information of the UE. For example, after receiving a UE capability enquiry (UE Capability Enquiry) message, the UE sends a UE capability information (UE Capability Information) message. In a communication process, the UE determines that a capability change is required and/or configuration preference. For example, for multi-SIM terminals that support multiple Tx or Rx, the UE may need to utilize some Tx or Rx paths to perform tasks on a network B while residing or keeping in a connected state on a network A. To meet this requirement, the UE determines that a capability change is required and/orconfiguration preference.

S212: The UE sends a first request message, where the first request message is used for requesting a network-side device for the capability change and/or is used for sending configuration preference.

Optionally, the first request message may carry at least one of the following information from (1) to (4).
(1) Configuration preference information. The configuration preference information is used for indicating expected configuration of the UE. For example, the configuration preference information may include at least one of the following:
   i. a configuration upper limit, that is, the UE expects the configuration of the network not to exceed the configuration preference;
   ii. time information of the configuration preference, where the time information includes one of the following: duration, cycle and start time, that is, the expected time of the UE when the configuration preference takes effect;
   iii. cyclical configuration switching request information, that is, the UE requests for periodic configuration switching (Configuration Switching); for example, a network (NW) A sends two sets of configurations to the UE, and the UE performs configuration switching based on the cycle on the NW A; and
   iv. multi-SIM configuration preference indication information, where the multi-SIM configuration preference indication information indicates that the configuration preference information is used for a multi-SIM, that is, the configuration preference is used for a multi-SIM purpose.
(2) Capability change requirement information. The capability change requirement information is used for indicating that the UE requires a capability change. The UE expects the configuration of the network not to exceed the capability after the change.
(3) Reconfiguration indication information. The reconfiguration indication information is used for indicating that the network-side device needs to reconfigure the UE, or the reconfiguration indication information is used for indicating that the network-side device does not need to reconfigure the UE. For example, reconfiguration indication information indicating that reconfiguration is required means that the network may need to reconfigure the UE according to configuration preference and/or capability change requirements. For example, the current configuration includes dual connectivity (MR-DC SCG), the UE capability is changed to not support dual connectivity, and the UE expects the network to release SCG connectivity. Reconfiguration indication information indicating that reconfiguration is not required means that the network may not need to reconfigure the UE according to configuration preference and/or capability change requirements. For example, the current configuration does not include dual connectivity (MR-DC SCG), the UE sends a first request message used for expecting the network not to configure dual connectivity, and at the same time, the network does not need to initiate reconfiguration of the corresponding first request message.
(4) Target indication information. The target indication information is used for indicating that the first request message is to request a capability change and/or send configuration preference for a multi-SIM purpose. That is, the UE sends the first request for the multi-SIM purpose, not for power saving or overheating, etc., and therefore expects the network-side device to respond.

In one possible implementation of this embodiment of this application, the first request message may be sent via a UE assistance information (UE Assistance Information) message. In related technologies, in order to save power or prevent overheating, UE may send a preference indication in a UE assistance information (UE Assistance Information) message to a network. The network determines whether to change the configuration of the UE. For example, the UE recommends the network to configure fewer carriers, fewer MIMO layers, or longer DRX cycles. The network may adjust the configuration of the UE accordingly. Therefore, in this embodiment of this application, the UE assistance information message may be multiplexed for sending the first request message in the UE assistance information message to request a capability change and/or send configuration preference for the multi-SIM purpose.

In another possible implementation, the first request message may also be sent via a UE capability information (UE Capability Information) message. In related technologies, the network-side device may initiate a capability transmission process to UE in a connected state, thereby obtaining the wireless access capability information of the UE. The UE sends a UE capability information (UE Capability Information) message to the network in a case that the UE receives a UE capability enquiry (UE Capability Enquiry) message sent from the network-side device, and the UE capability information message may carry the UE capability information. In this embodiment of this application, the UE capability information message may be multiplexed for sending the first request message in the UE capability information message to request a capability change and/or send configuration preference for the multi-SIM purpose.

In another possible implementation of this embodiment of this application, the first request message may also be sent via a radio resource control (Radio Resource Control, RRC) connection setup complete (RRC Setup Complete) message. That is, the first request message is sent in the RRC connection setup complete message sent to the network-side device in a case that the UE completes RRC connection setup with the network side.

In the above possible implementation, the RRC connection setup complete message carries first capability information of the UE, where the first capability information is different from second capability information, the second capability information is the most recently reported capability information of the UE, or the second capability information is the capability information reported during the UE registering a network, or the second capability information is the maximum capability information of the UE. For example, the second capability is 4 MIMO layers, and the first capability is 2 MIMO layers. Or, the second capability supports dual connectivity, while the first capability does not support dual connectivity.

In the above possible implementation, the capability information of the UE is the first capability information during a period in an RRC connected state corresponding to the RRC connection setup complete message. That is, the UE capability is the first capability during the period in the current RRC connected state and remains unchanged.

S214: The UE executes corresponding processing based on the response of the network-side device.

After sending the first request message to the network-side device, the UE executes corresponding processing based on the response of the network-side device to the first request message.

After receiving the first request message, the network-side device may respond to the first request message, and thus, in one possible implementation, step S214 may include:
the UE monitors a response message sent from the network-side device; and
the UE executes the corresponding processing based on the response message in a case that the response message is detected.

In the above possible implementation, the response message may be an RRC reconfiguration message, which means that the network-side device reconfigures a terminal after receiving the first request message.

Alternatively, the response message may also be other messages, which can carry at least one of the following information:
(1) acceptance information, where the acceptance information indicates that the network-side device accepts the first request message, i.e., the network-side device accepts the first request message sent from the terminal; and
(2) reconfiguration information. The network-side device may reconfigure the UE according to the first request message. For example, capability requirements complying with the UE are reconfigured, or capability not exceeding the UE request is reconfigured.

In the above possible implementation, optionally, the UE applies the requested capability change and/or the sent configuration preference in a case that the UE executes corresponding processing based on the response message, and the response message carries the acceptance information. That is, the capability change requested and/or the configuration preference sent by the UE takes effect.

Alternatively, the UE executes a reconfiguration process based on the reconfiguration information or RRC reconfiguration message in a case that the response message carries the reconfiguration information or the response message is an RRC reconfiguration message.

Alternatively, the capability change requested and/or the configuration preference sent by the UE takes effect in a case that the UE receives the response message. That is, by default, the capability change and/or configuration preference takes effect after the UE receives the response message from the network.

In a possible implementation, the network-side device may be provided with a first timer, or a protocol stipulated first timer, and the UE monitoring the response messages sent from the network-side device may include: the UE starts the first timer after sending the first request message, where a duration of the first timer is configured by the first configuration message, or the duration of the first timer is predefined; and the UE monitors the response message sent from the network-side device during the duration of the first timer. That is, in the possible implementation, the UE monitors the response of the network-side device within a predefined time period after sending the first request message.

In the above possible implementation, the UE starting the first timer includes: the UE starts the first timer after sending the first request message in a case of determining that the network-side device needs to perform reconfiguration. That is, the UE starts the first timer to monitor the response of the network-side device in a case that the capability change and/or preference configuration requested by the first request message sent from the UE needs to be reconfigured by the network-side device.

Optionally, the UE determining that the network-side device needs to perform reconfiguration may include at least one of the following: the first request message includes reconfiguration indication information; the first request message includes the reconfiguration indication information and the reconfiguration indication information indicates that the network-side device needs to reconfigure the UE; the UE requests for a capability change; and the current configuration of the UE does not satisfy the preference configuration requested by the UE. For example, the capability should decrease after a UE capability change, but the current configuration is greater than the capability after the UE capability change, and thus the network-side device needs to reconfigure the UE.

Optionally, the UE is not allowed to send the first request message again during the duration of the first timer; or, the UE is not allowed to send a second request message for requesting a capability change and/or sending configuration preference during the duration of the first timer, where the second request message is different from the first request message. That is, the UE monitors response messages from the network during the duration of the first timer, and the UE cannot send the same first request message again during the duration of the first timer, or the UE cannot send the second request message for requesting a capability change and/or sending configuration preference.

In a possible implementation, after the first timer is started, the method further includes: the UE stops the first timer during the duration of the first timer in one of the following situations:
(1) the response message sent from the network-side device is received; and
(2) the response message sent from the network-side device is received, and the response message satisfies the configuration preference of the UE. For example, the first timer is stopped in a case that the response message includes reconfiguration information, and the reconfiguration information satisfies the configuration preference of the UE. Or, the first timer is stopped in a case that the response message is the reconfiguration message, and the reconfiguration message satisfies the configuration preference of the UE.

That is, the conditions for the UE to stop the first timer during the duration of the first timer include one of the following:
(1) the UE receives the response message (e.g., a reconfiguration message) from the network; and
(2) the UE receives the reconfiguration message or reconfiguration information sent from the network, which satisfies the configuration preference of the UE.

In a possible implementation, the UE executing corresponding processing based on the response of the network-side device further includes: the UE performs a first operation in a case that the first timer expires. For example, the UE stops the first timer in a case that before the first timer expires, the UE does not receive the response message from network-side device, or the received reconfiguration message or reconfiguration information does not satisfy the configuration preference of the UE.

Optionally, the first operation includes, but is not limited to, at least one of the following:
(1) applying a preference configuration and/or capability change of the UE, where the preference configuration and/or capability change may or may not be requested by the first request message;
(2) applying the configuration and/or capability corresponding to the first request message, for example, the preference configuration requested by the first request message, or the capability change requested by the first request message, i.e., the capability after the change.
(3) deactivating a secondary cell group (SCG) connection;
(4) releasing the SCG connection, that is, the UE releasing SCG connections locally;
(5) reducing a number of multiple input multiple output (MIMO) layers, for example, from 4 MIMO layers to 2 MIMO layers;
(6) reducing a number of downlink carriers (DL CA), for example, reducing the DL CA from 6 carrier aggregations (CAs) to 5 CAs;
(7) reducing a number of uplink carriers (UL CA);
(8) resending the first request message; and
(9) performing a network switching operation, e.g., from a network A to a network B, for example, the UE automatically switches from the network A to the network B in a case that for the purpose of network switching, UE sends a first request message to a network-side device, and the UE does not receive a response of the network-side device when the first timer expires.

The above possible implementation presents a processing solution for the UE in a case that the network does not respond or the request of the UE is not satisfied after the UE requests a capability change or sends configuration preference for the multi-SIM purpose, thereby effectively perfecting negotiation of the capability change or configuration, and improving the network switching performance of multi-SIM UE.

In a possible implementation, the UE executes corresponding processing based on the response message in a case than a response message sent from the network-side device is detected by the UE before the first timer expires, and optionally, the executable processes include one of the following:
(1) the UE performs a second operation in a case that the response message satisfies the configuration preference of the UE,
   where the second operation may include at least one of the following:
      a) the UE stops the first timer in a case that the first timer is working;
      b) the UE executes a reconfiguration process based on the response message, for example, a reconfiguration process based on reconfiguration information carried in the response message, or a reconfiguration process based on the received reconfiguration message; and
      c) the UE performs network switching after the reconfiguration process is completed;
   for example, the UE may perform the following operations in a case that the UE requests deactivation of SCG in a first request message, and a reconfiguration message sent from the network-side device indicates deactivation of SCG: the UE stops the first timer in a case that the first timer is working; the UE executes a reconfiguration process; and the UE performs network switching after the reconfiguration process is completed;
(2) the UE stops the first timer and performs the first operation in a case that the response message does not satisfy the configuration preference of the UE and the first timer is working; for example, the UE stops the first timer and performs the first operation in a case that the reconfiguration information carried in the response message or the reconfiguration message returned by the network-side device does not satisfy the configuration preference of the UE and the first timer is working; and
(3) the UE performs the first operation after the first timer expires in a case that the response message does not satisfy the configuration preference of the UE and the first timer is working; for example, the UE does not stop the first timer but performs the first operation after the first timer expires in a case that the reconfiguration information carried in the response message or the reconfiguration message returned by the network-side device does not satisfy the configuration preference of the UE and the first timer is working.

The above (2) and (3) present a processing method for the UE in a case that the network does not satisfy the request of the UE after the UE requests a capability change and/or sends configuration preference for the multi-SIM purpose, thereby effectively perfecting a solution for capability change and/or configuration negotiation, and improving the network switching performance of multi-SIM UE.

In a possible implementation, the network-side device may also send a first configuration message used for indicating whether the UE is allowed to send the first request message, that is, whether the UE is allowed to request a capability change and/or send configuration preference. Therefore, before S210, the method may further include: a first configuration message sent from the network-side device is received, where the first configuration message is used for indicating that the UE is allowed to send the first request message. The UE sends the first request message to the network-side device when a capability change is required and/or configuration preference after receiving the first configuration message.

Optionally, the first configuration message may include at least one of the following information:
(1) first indication information, which indicates that the configuration preference and/or capability change of the terminal is supported; for example, the first configuration message includes an indicator bit for indicating whether the network-side device supports the configuration preference and/or capability change of the terminal; and
(2) duration of a first timer; or, the duration of the first timer may be stipulated in a protocol. The first configuration message may not include the first indication information in a case that the duration of the first timer is included. That is, the network-side device supports the configuration preference and/or capability change of the terminal by default in a case that the duration of the first timer is configured in the first configuration message.

Optionally, the first configuration message may be sent via a system information (SI) message or an RRC reconfiguration message. For example, the first configuration message is carried in OtherConfig IE of the RRC reconfiguration message.

In this embodiment of this application, a negotiation solution for capability change and/or configuration preference of multi-SIM UE is provided, so that the UE may execute corresponding processing based on the response of a network-side device after the UE requests a capability change or sends configuration preference for multi-SIM tasks. Also, processing operations for the UE in a case that the network does not respond or the request of the UE is not satisfied are provided, thereby effectively perfecting negotiation of the capability change or configuration, and improving the network switching performance of the multi-SIM UE.

FIG. 3 is another schematic flowchart of a UE capability change method provided in an embodiment of this application, and the method 300 may be performed by a network-side device. In other words, the method may be performed by software or hardware installed on the network-side device. As shown in FIG. 3, the method may include the following steps.

S310: A network-side device receives a first request message sent from UE, where the first request message is used for requesting a capability change and/or is used for sending configuration preference by the UE.

The UE may send the first request message according to the method 200, and the first request message is the same as that in the method 200. Please refer to the description in the method 200 for details.

S312: The network-side device responds to the first request message.

In this embodiment of this application, the network-side device may respond to the first request message based on the operational situation of the network-side device. For example, the network-side device may send a response message to the UE, and the response message indicates acceptance of the first request message and/or carries reconfiguration information, or the network-side device may send a reconfiguration message to the UE. The reconfiguration information or reconfiguration message may or may not satisfy the configuration preference of the UE.

In a possible implementation, the first request message may carry at least one of the following information:
configuration preference information, where the configuration preference information is used for indicating expected configuration of the UE;
capability change requirement information, where the capability change requirement information is used for indicating that the UE requires a capability change;
reconfiguration indication information, where the reconfiguration indication information is used for indicating that the network-side device needs to reconfigure the UE, or the reconfiguration indication information is used for indicating that the network-side device does not need to reconfigure the UE; and
target indication information, where the target indication information is used for indicating that the first request message is to request a capability change and/or send configuration preference for a multi-SIM purpose.

In a possible implementation, the configuration preference information includes at least one of the following:
a configuration upper limit;
time information of the configuration preference, where the time information includes one of the following: duration, cycle and start time;
cyclical configuration switching request information; and
multi-SIM configuration preference indication information, where the multi-SIM configuration preference indication information indicates that the configuration preference information is used for a multi-SIM.

In a possible implementation, the first request message is carried via one of the following messages:
a UE assistance information message;
a UE capability information message; and
an RRC connection setup complete message.

Optionally, the RRC connection setup complete message carries the first capability information of the UE, where the first capability information is different from second capability information, the second capability information is the most recently reported capability information of the UE, or the second capability information is the capability information reported during the UE registering a network, or the second capability information is the maximum capability information of the UE.

Optionally, the capability information of the UE is the first capability information during the period in the RRC connected state corresponding to the RRC connection setup complete message.

In a possible implementation, the network-side device responding to the first request message includes:
the network-side device sends a response message to the UE or sends an RRC reconfiguration message to the UE based on the first request message, where the response message carries at least one of the following information:
acceptance information, where the acceptance information indicates that the network-side device accepts the first request message; and
reconfiguration information.

In a possible implementation, before the network-side device receives the first request message sent from the UE, the method further includes: a first configuration message is sent to the UE, where the first configuration message is used for indicating whether the UE is allowed to send the first request message.

Optionally, the first configuration message includes at least one of the following information:

first indication information, where the first indication information indicates that the configuration preference and/or capability change of a terminal is supported; and
a duration of a first timer.

Optionally, the first configuration message may be sent via one of the following messages:
an SI message; and
an RRC reconfiguration message.

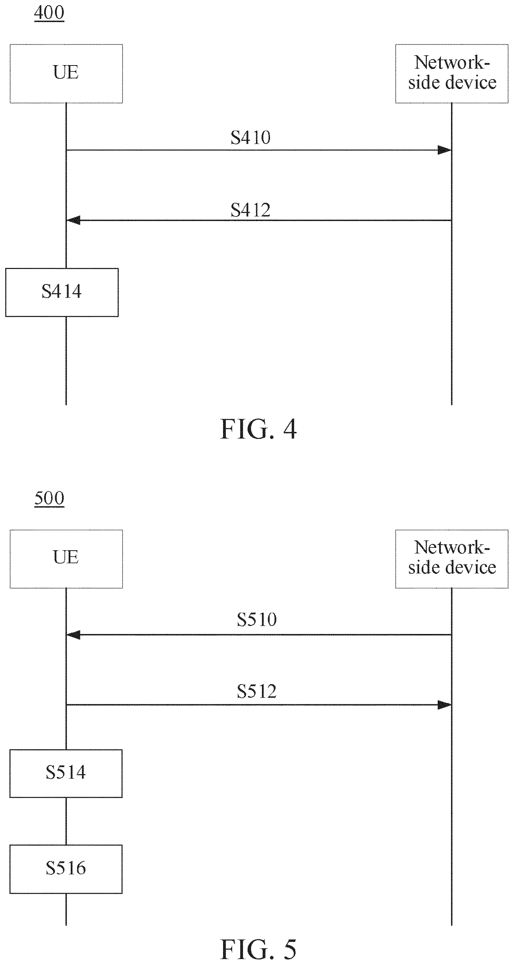

FIG. 4 is another schematic flowchart of a UE capability change method provided in an embodiment of this application, and the method 400 may be performed by UE and a network-side device. In other words, the method may be performed by software or hardware installed on the UE and the network-side device. As shown in FIG. 4, the method may include the following steps.

S410: The UE sends a first request message, where the first request message is used by the UE for requesting a network for a capability change and/or sending configuration preference.

Optionally, the first request message includes at least one of the following contents:
(1) configuration preference (Configuration Preference), which indicates the expected configuration of the UE, for example,
   a) a configuration upper limit, that is, the UE expects the configuration of the network not to exceed the configuration preference;
   b) time information of the configuration preference, including duration, cycle and start time;
   c) the UE requesting cyclical configuration switching (Configuration Switching), for example, a network (NW) A sends two sets of configurations to the UE, and the UE performs configuration switching based on the cycle on the NW A; and
   d) multi-SIM configuration preference, that is, the configuration preference is used for a multi-SIM purpose;
(2) capability change requirement, which indicates that the UE requires a capability change, and the UE expects the configuration of the network not to exceed the capability;
(3) reconfiguration indication, which indicates that the network-side device needs to reconfigure the UE, for example,
   a) reconfiguration is required: the network may need to reconfigure the UE according to the configuration preference or capability change requirements; for example, the current configuration includes dual connectivity (MR-DC SCG), the UE capability is changed to not support dual connectivity, and the UE expects the network to release SCG connectivity; and
   b) reconfiguration is not required: the network may not need to reconfigure the UE according to the configuration preference or capability change requirements; for example, the current configuration does not include dual connectivity (MR-DC SCG), the UE sends a first request message used for expecting the network not to configure dual connectivity, and at the same time the network does not need to initiate reconfiguration of the corresponding first request message;
(4) multi-SIM purpose (multi-SIM purpose), that is the UE indicates that the first request message is for the multi-SIM purpose, not for power saving or overheating, etc.

Optionally, the first request message may be carried via the following messages:
- UE assistance information (UE Assistance Information);
- UE capability information (UE Capability Information); and
- RRC connection setup complete (RRC Setup Complete). The UE capability information is the first capability information which may be different from the UE second capability in a case that the first request message is carried via the RRCSetupComplete message. For example, the second capability may be the original capability or the last reported capability of a terminal. Optionally, the UE capability is the first capability during the period in the current RRC connected state and remains unchanged. The original capability of the UE corresponds to the capability reported by the UE during network registration, or the maximum capability of the UE. For example,
   a) the original capability is 4 MIMO layers, and the first capability is 2 MIMO layers; and
   b) the original capability supports dual connectivity, while the first capability does not support dual connectivity.

S412: The network sends a response message to the UE.

The response message may include one or more of the following information:
- acceptance of the first request message by the network; and
- reconfiguration information. The network reconfigures the UE according to the request message. For example, the configuration complies with the capability requirements of the UE, or configurations that exceed the capability requested by the UE are avoided.

Or, the response message may also be an RRC reconfiguration message.

S414: The UE executes corresponding processing according to the response of the network to the first request message.

The UE executing corresponding processing according to the response of the network to the first request message may include one of the following:
a) the UE receives an acceptance message from the network, the capability change takes effect, and the capability change or configuration negotiation process ends;
b) the UE receives a reconfiguration message and initiates a reconfiguration process based on the reconfiguration message;
c) or, by default, the capability change takes effect after the UE receives the response message from the network.

FIG. 5 is another schematic flowchart of a UE capability change method provided in an embodiment of this application, and the method 500 may be performed by UE and a network-side device. In other words, the method may be performed by software or hardware installed on the UE and the network-side device. As shown in FIG. 5, the method may include the following steps.

S510: The network-side device sends a first configuration message, where the first configuration message is used for configuring whether the UE sends a first request message.

The first configuration message may include at least one of the following:
- whether a configuration preference or capability change of a MSIM is supported; if supported, the UE may send a first request message; otherwise, the UE may not send the first request message; and
- duration of a first timer.

Optionally, the first configuration message may be sent via the following messages:
- a system message; and
- an RRC reconfiguration message, for example, the configuration message is carried in OtherConfig IE.

Optionally, the first configuration message also may not include the duration of the first timer, and the duration of the first timer is stipulated in a protocol.

S512: The UE sends a first request message to the network-side device.

For example, the UE may send the first request message in response to a requirement for a capability change or configuration preference, in a case that the first configuration message received by the UE indicates that the network-side device supports the configuration preference or capability change of the MSIM.

The first request message is the same as that in the method 400 and will not be described here again. Please refer to the description in the method 400 for details.

S514: The UE starts a first timer.

The UE starting the timer includes at least one of the following:
(1) the UE starts the first timer after sending the first request message in a case that the duration of the first timer is configured or stipulated; and
(2) the UE starts the first timer after sending the first request message, in a case that the duration of the first timer is configured or stipulated and the first request message includes a reconfiguration indication.

Optionally, the UE monitors response messages from the network during the duration of the first timer, and the UE cannot send the same first request message again or the UE cannot send a second request message, for example, the UE cannot send a request message different from the capability change and/or configuration preference requested by the first request message sent before.

Optionally, the conditions for the UE to stop the first timer during the duration of the first timer may include, but is not limited to, one of the following:
(1) the UE receives the response message (including a reconfiguration message) from the network; and
(2) the UE receives the reconfiguration message sent from the network, which satisfies the configuration preference of the UE.

S516: The UE performs a first operation in a case that the first timer expires.

For example, the UE performs the following operations in a case that the first timer expires:
(1) applying a preference configuration;
(2) applying the configuration corresponding to the first request message;
(3) deactivating SCG connection;
(4) releasing SCG connection locally;
(5) reducing from 4 MIMO layers to 2 MIMO layers;
(6) reducing the number of DL CA or UL CA, for example, reducing the DL CA from 6 CAs to 5 CAs;
(7) the UE resending the first request message; and
(8) the UE performing a network switching operation, for example, from a NW A to a NW B.

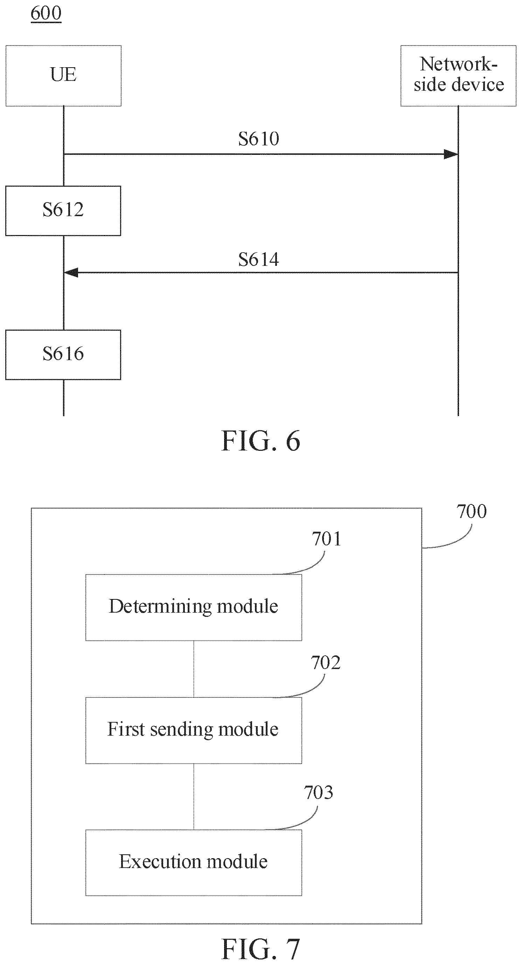

FIG. 6 is another schematic flowchart of a UE capability change method provided in an embodiment of this application, and the method 600 may be performed by UE and a network-side device. In other words, the method may be performed by software or hardware installed on the UE and the network-side device. As shown in FIG. 6, the method may include the following steps.

S610: The UE sends a first request message to the network-side device.

Same as S410 in the method 400.

S612: The UE starts a first timer.

The duration of the first timer may be configured by the network-side device, for example, by the first configuration message in the method 500, and may also be stipulated in a protocol.

S614: The network-side device sends a reconfiguration message to the UE.

S616: The UE executes processes based on the received reconfiguration message.

Optionally, the UE executing processes based on the received reconfiguration message may include:
(1) the UE may perform the following operations in a case that the reconfiguration message satisfies the configuration preference of the UE, for example, the UE requests deactivation of SCG in the first request message, and the reconfiguration message indicates deactivation of SCG:
   a) the UE stops the first timer in a case that the first timer is working;
   b) the UE executes a reconfiguration process; and
   c) the UE performs network switching after the reconfiguration process is completed.
(2) The UE performs one of the following operations in a case that the reconfiguration message does not satisfy the configuration preference of the UE, for example, the UE requests deactivation of SCG in the first request message, but the reconfiguration message does not indicate deactivation of SCG:
   a) the UE stops the first timer and performs the first operation in a case that the first timer is working, for example, the UE automatically deactivates SCG; and
   b) the UE performs a first operation after the first timer expires in a case that the first timer is working.

The first operation may be the same as that in the method 500 and will not be described here again. Please refer to the description in the method 500 for details.

This embodiment of this application provides a method for Multi-SIM UE capability change or configuration negotiation, i.e., a processing method for the UE in a case that a network does not respond or does not satisfy the request of the UE after the UE requests a capability change and/or sends configuration preference for the multi-SIM purpose, thereby effectively perfecting the method for capability change and/or configuration negotiation, and improving the network switching performance of multi-SIM UE.

It should be noted that the UE capability change method provided in this embodiment of this application may be executed by a UE capability change apparatus, or by a control module configured to execute the UE capability change method in the UE capability change apparatus. In this embodiment of this application, the UE capability change method executed by the UE capability change apparatus is taken as an example to illustrate the UE capability change apparatus provided in this embodiment of this application.

FIG. 7 is a schematic structural diagram of a UE capability change apparatus provided in an embodiment of this application. As shown in FIG. 7, the apparatus 700 may include a determining module 701, a first sending module 702 and an execution module 703.

In this embodiment of this application, the determining module 701 is configured to determine that UE requires a capability change and/or sends configuration preference; the first sending module 702 is configured to send a first request message, where the first request message is used for requesting a network-side device for the capability change and/or is used for sending configuration preference; and the execution module 703 is configured to execute corresponding processing based on the response of the network-side device.

In a possible implementation, the first request message carries at least one of the following information:
configuration preference information, where the configuration preference information is used for indicating expected configuration of the UE;
capability change requirement information, where the capability change requirement information is used for indicating that the UE requires a capability change;
reconfiguration indication information, where the reconfiguration indication information is used for indicating that the network-side device needs to reconfigure the UE, or the reconfiguration indication information is used for indicating that the network-side device does not need to reconfigure the UE; and
target indication information, where the target indication information is used for indicating that the first request message is to request a capability change and/or send configuration preference for a multi-SIM purpose.

In a possible implementation, the configuration preference information includes at least one of the following:
a configuration upper limit;
time information of the configuration preference, where the time information includes one of the following: duration, cycle and start time;
cyclical configuration switching request information; and
multi-SIM configuration preference indication information, where the multi-SIM configuration preference indication information indicates that the configuration preference information is used for a multi-SIM.

In a possible implementation, the first request message is carried via one of the following messages:
a UE assistance information message;
a UE capability information message; and
an RRC connection setup complete message.

In a possible implementation, the RRC connection setup complete message carries the first capability information of the UE, where the first capability information is different from second capability information, the second capability information is the most recently reported capability information of the UE, or the second capability information is the capability information reported during the UE registering a network, or the second capability information is the maximum capability information of the UE.

In a possible implementation, the capability information of the UE is the first capability information during the period in the RRC connected state corresponding to the RRC connection setup complete message.

In a possible implementation, the execution module 703 executing corresponding processing based on the response of the network-side device includes:
a response message sent from the network-side device is monitored; and
the corresponding processing is executed based on the response message in a case that the response message is detected.

In a possible implementation, the response message is an RRC reconfiguration message; or, the response message carries at least one of the following information:
acceptance information, where the acceptance information indicates that the network-side device accepts the first request message; and
reconfiguration information.

In a possible implementation, the execution module 703 executing corresponding processing based on the response message includes at least one of the following:
the UE applies the requested capability change and/or the sent configuration preference in a case that the response message carries the acceptance information;
the UE executes a reconfiguration process based on the reconfiguration information or the RRC reconfiguration message in a case that the response message carries the reconfiguration information or the response message is an RRC reconfiguration message; and
the capability change requested and/or the configuration preference sent by the UE takes effect in a case that the response message is received.

In a possible implementation, the execution module 703 monitoring response messages sent from the network-side device includes:
a first timer is started after sending the first request message, where the duration of the first timer is configured by the first configuration message, or the duration of the first timer is predefined; and
a response message sent from the network-side device are monitored during the duration of the first timer.

In a possible implementation, the execution module 703 starting the first timer includes:
the first timer is started after sending the first request message in a case of determining that the network-side device needs to perform reconfiguration.

In a possible implementation, the UE is not allowed to send the first request message again during the duration of the first timer; or, the UE is not allowed to send a second request message for requesting a capability change and/or sending configuration preference during the duration of the first timer, where the second request message is different from the first request message.

In a possible implementation, the execution module 703 is further configured to stop the first timer during the duration of the first timer in one of the following situations:
the response message sent from the network-side device is received; and
the response message sent from the network-side device is received, and the response message satisfies the configuration preference of the UE.

In a possible implementation, the execution module 703 executing corresponding processing based on the response of the network-side device further includes:
the UE performs a first operation in a case that the first timer expires.

In a possible implementation, the execution module 703 executing corresponding processing based on the response message includes one of the following:
a second operation is performed in a case that the response message satisfies the configuration preference of the UE;
the first timer is stopped and the first operation is performed in a case that the response message does not satisfy the configuration preference of the UE and the first timer is working; and
the first operation is performed after the first timer expires in a case that the response message does not satisfy the configuration preference of the UE and the first timer is working.

In a possible implementation, the second operation includes at least one of the following:
the UE stops the first timer in a case that the first timer is working;
the UE executes a reconfiguration process based on the response message; and
the UE performs network switching after the reconfiguration process is completed.

In a possible implementation, the first operation includes at least one of the following:
applying a preference configuration and/or capability change of the UE;
applying the configuration and/or capability corresponding to the first request message;
deactivating a secondary cell group (SCG) connection;
releasing the SCG connection;
reducing a number of multiple input multiple output (MIMO) layers;
reducing a number of downlink carriers;
reducing a number of uplink carriers;
resending the first request message; and
performing a network switching operation.

In a possible implementation, the apparatus further includes: a first receiving module, configured to receive a first configuration message sent from the network-side device, where the first configuration message is used for indicating whether the UE is allowed to send the first request message.

In a possible implementation, the first configuration message includes at least one of the following information:
first indication information, where the first indication information indicates that the configuration preference and/or capability change of a terminal is supported; and
a duration of a first timer.

In a possible implementation, the first configuration message is sent via one of the following messages:
a system information (SI) message; and
an RRC reconfiguration message.

The UE capability change apparatus in this embodiment of this application may be an apparatus, and may also be a component, integrated circuit, or chip in the terminal. The apparatus may be a mobile terminal or a non-mobile terminal. For example, the mobile terminal may include, but is not limited to, the types of terminals 11 listed above, and the non-mobile terminal may be a server, a network attached storage (Network Attached Storage, NAS), a personal computer (personal computer, PC), a television (television, TV), an automatic teller machine (ATM), or a self-service machine, etc., which is not specifically limited in this embodiment of this application.

The UE capability change apparatus in this embodiment of this application may be an apparatus having an operating system. The operating system may be an Android (Android) operating system, an ios operating system, or other possible operating systems, which is not specifically limited in this embodiment of this application.

The UE capability change apparatus provided in this embodiment of this application can implement the processes implemented by the UE in the method embodiments in FIGs. 2 to 6, and achieve the same technical effects. Details will not be described here again to avoid repetition.

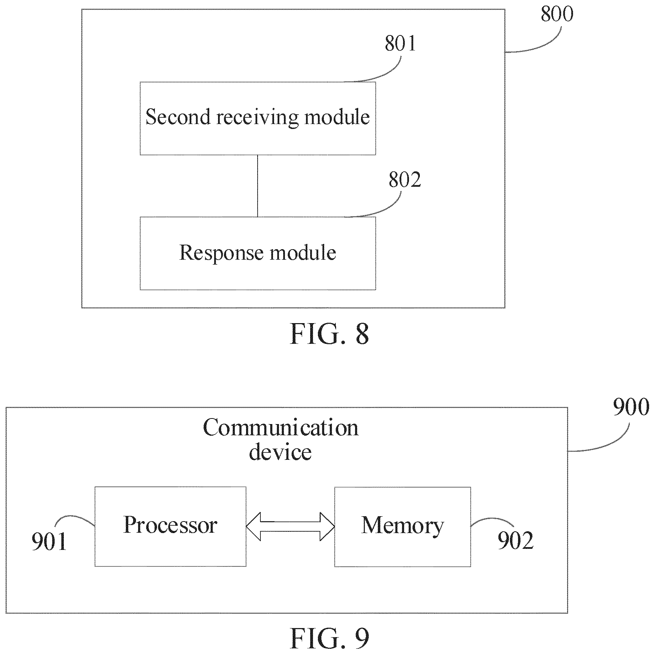

FIG. 8 is another schematic structural diagram of a UE capability change apparatus provided in an embodiment of this application. As shown in FIG. 8, the apparatus 800 mainly includes: a second receiving module 801 and a response module 802.

In this embodiment of this application, the second receiving module 801 is configured to receive a first request message sent from UE, where the first request message is used for requesting a capability change and/or sending configuration preference by the UE; and the response module 802 is configured to respond to the first request message.

In a possible implementation, the first request message carries at least one of the following information:
configuration preference information, where the configuration preference information is used for indicating expected configuration of the UE;
capability change requirement information, where the capability change requirement information is used for indicating that the UE requires a capability change;
reconfiguration indication information, where the reconfiguration indication information is used for indicating that the network-side device needs to reconfigure the UE, or the reconfiguration indication information is used for indicating that the network-side device does not need to reconfigure the UE; and
target indication information, where the target indication information is used for indicating that the first request message is to request a capability change and/or send configuration preference for a multi-SIM purpose.

In a possible implementation, the configuration preference information includes at least one of the following:
a configuration upper limit;
time information of the configuration preference, where the time information includes one of the following: duration, cycle and start time;
cyclical configuration switching request information; and
multi-SIM configuration preference indication information, where the multi-SIM configuration preference indication information indicates that the configuration preference information is used for a multi-SIM,

In a possible implementation, the first request message is carried via one of the following messages:
a UE assistance information message;
a UE capability information message; and
a radio resource control (RRC) connection setup complete message.

In a possible implementation, the RRC connection setup complete message carries the first capability information of the UE, where the first capability information is different from second capability information, the second capability information is the most recently reported capability information of the UE, or the second capability information is the capability information reported during the UE registering a network, or the second capability information is the maximum capability information of the UE.

In a possible implementation, the capability information of the UE is the first capability information during the period in the RRC connected state corresponding to the RRC connection setup complete message.

In a possible implementation, the response module 802 responding to the first request message includes:
a response message is sent to the UE or an RRC reconfiguration message is sent to the UE based on the first request message, where the response message carries at least one of the following information:
acceptance information, where the acceptance information indicates that the network-side device accepts the first request message; and
reconfiguration information.

In a possible implementation, the apparatus further includes:
a second sending module, configured to send a first configuration message to the UE, where the first configuration message is used for indicating whether the UE is allowed to send the first request message.

In a possible implementation, the first configuration message includes at least one of the following information:
first indication information, where the first indication information indicates that the configuration preference and/or capability change of a terminal is supported; and
a duration of a first timer.

In a possible implementation, the first configuration message is sent via one of the following messages:
a system information (SI) message; and
an RRC reconfiguration message.

The UE capability change apparatus provided in this embodiment of this application can implement the processes implemented by the network or network-side device in the method embodiments in FIGs. 2 to 6, and achieve the same technical effects. Details will not be described here again to avoid repetition.

Optionally, as shown in FIG. 9, an embodiment of this application further provides a communication device 900, which includes a processor 901, a memory 902, a program or instruction stored in the memory 902 and executable on the processor 901. For example, the program or instruction, when executed by the processor 901, implements the processes implemented by the UE in the embodiments of the aforementioned UE capability change method, and can achieve the same technical effects in a case that the communication device 900 is a terminal. The program or instruction, when executed by the processor 901, implements the processes implemented by the network-side device in the above UE capability change method embodiment, and can achieve the same technical effects in a case that the communication device 900 is a network-side device. Details will not be described here again to avoid repetition.

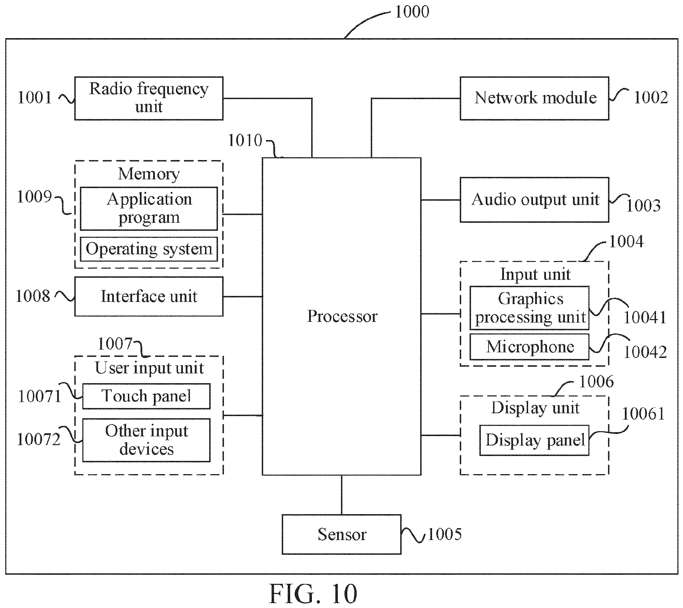

An embodiment of this application further provides a terminal, which includes a processor and a communication interface, where the processor is configured to implement the processes implemented by the UE in the above UE capability change method embodiment, and the communication interface is configured to communicate with the network-side device. This terminal embodiment corresponds to the above terminal side method embodiment, and the implementation processes and methods of the above method embodiments are all applicable to this terminal embodiment, and can achieve the same technical effects. Specifically, FIG. 10 is a schematic diagram of a hardware structure of a terminal for implementing the embodiments of this application.

The terminal 1000 includes, but is not limited to: a radio frequency unit 1001, a network module 1002, an audio output unit 1003, an input unit 1004, a sensor 1005, a display unit 1006, a user input unit 1007, an interface unit 1008, a memory 1009, a processor 1010, and other components.

Those skilled in the art may understand that the terminal 1000 may further include a power supply (such as a battery) for supplying power to the components, and the power supply may be logically connected to the processor 1010 via a power management system, thereby implementing functions such as charging, discharging and power consumption management via the power management system. The terminal structure shown in FIG. 10 does not constitute a limitation to the terminal, and the terminal may include more or fewer components than those shown in the figure, or some components may be combined, or different component layouts may be used, which will not be described in detail here.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image acquisition apparatus (e.g., a camera) in a video acquisition mode or image acquisition mode. The display unit 1006 may include a display panel 10061, and the display panel 10061 may be configured in the form of a liquid crystal display (LCD), an organic light-emitting diode (OLED), or the like. The user input unit 1007 includes a touch panel 10071 and other input devices 10072. The touch panel 10071 is also known as a touch screen. The touch panel 10071 may include two parts: a touch detection apparatus and a touch controller. The other input devices 10072 may include, but is not limited to, a physical keyboard, a functional key (such as a volume control key and a switch key), a trackball, a mouse and a joystick, which will not be described in detail here.

In this embodiment of this application, after the radio frequency unit 1001 receives downlink data from a network-side device, the downlink data is sent to the processor 1010 for processing. In addition, the downlink data is sent to the network-side device. Generally, the radio frequency unit 1001 includes, but is not limited to, an antenna, at least one amplifier, a transceiver, a coupler, a low noise amplifier, a duplexer, and the like.

The memory 1009 is configured to store a software program or instruction and various data. The memory 1009 may mainly include a program or instruction storage area and a data storage area, where the program or instruction storage area may store an operating system, an application program or instruction required by at least one function (such as a sound playback function and an image playback function), and the like. In addition, the memory 1009 may include a high-speed random access memory, and may also include a non-transient memory, where the non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory device or other non-transient solid-state storage devices.

The processor 1010 may include one or more processing units. Optionally, the processor 1010 may integrate an application processor and a modem processor, where the application processor mainly processes an operating system, a user interface, an application program or instruction, and the like, and the modem processor mainly processes wireless communication, such as a baseband processor. It can be understood that, the modem processor may alternatively not be integrated into the processor 1010.

The processor 1010 is configured to determine that a capability change is required and/or configuration preference.

The radio frequency unit 1001 is configured to send a first request message, where the first request message is used for requesting a network-side device for the capability change and/or is used for sending configuration preference.

The processor 1010 is further configured to execute corresponding processing based on the response of the network-side device.

An embodiment of this application further provides a network-side device, including a processor and a communication interface, where the processor is configured to implement the processes implemented by the network-side device in the above UE capability change method embodiment, and the communication interface is configured to communicate with UE. This network-side device embodiment corresponds to the above network-side device method embodiment, and the implementation processes and methods of the above method embodiments are all applicable to this network-side device embodiment, and can achieve the same technical effects.

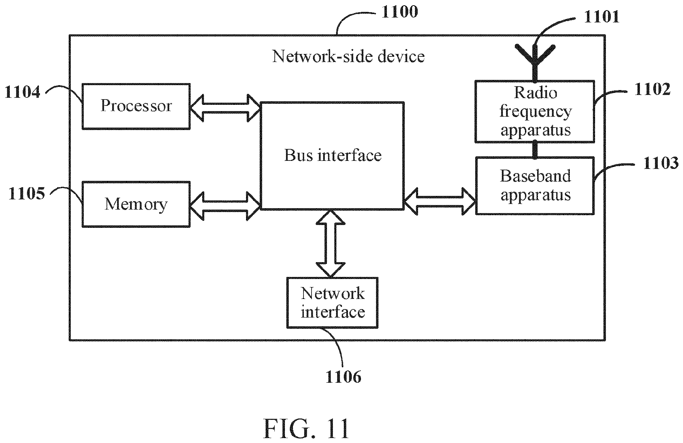

Specifically, this embodiment of this application further provides a network-side device. As shown in FIG. 11, the network-side device 1100 includes: an antenna 1101, a radio frequency apparatus 1102 and a baseband apparatus 1103. The antenna 1101 is connected to the radio frequency apparatus 1102. In an uplink direction, the radio frequency apparatus 1102 receives information via the antenna 1101 and sends the received information to the baseband apparatus 1103 for processing. In a downlink direction, the baseband apparatus 1103 processes the information to be sent and sends the processed information to the radio frequency apparatus 1102, and the radio frequency apparatus 1102 processes the received information and then sends the processed information out via the antenna 1101.

A frequency band processing apparatus may be located in the baseband apparatus 1103. The method implemented by the network-side device in the above embodiment may be implemented in the baseband apparatus 1103. The baseband apparatus 1103 includes a processor 1104 and a memory 1105.

The baseband apparatus 1103 may include at least one baseband board, multiple chips are provided on the baseband board, as shown in FIG. 11, where one chip, for example, the processor 1104, is connected to the memory 1105 to call programs in the memory 1105 and perform network device operations as shown in the above method embodiments.

The baseband apparatus 1103 may further include a network interface 1106 configured to exchange information with the radio frequency apparatus 1102. The interface may be a common public radio interface (common public radio interface, CPRI).

Specifically, the network-side device in this embodiment of the present invention further includes: an instruction or program stored in the memory 1105 and executable on the processor 1104, where the instruction or program in the memory 1105 may be called by the processor 1104 to execute the method executed by the modules shown in FIG. 8 and achieve the same technical effects. Details will not be described here to avoid repetition.

An embodiment of this specification further provides a readable storage medium, a program or instruction is stored on the readable storage medium, where the program or instruction, when executed by a processor, implements the processes of the above UE capability change method embodiments, and can achieve the same technical effects. Details will not be repeated here to avoid repetition.

The processor is the processor in the terminal in the above embodiment. The readable storage medium includes a computer-readable storage medium, such as a read-only memory (Read-Only Memory, ROM), a random access memory (Random Access Memory, RAM), a magnetic disk, an optical disc, or the like.

An embodiment of this application further provides a chip, including a processor and a communication interface, where the communication interface is coupled with the processor, and the processor is configured to execute a program or instruction to implement the above UE capability change method embodiment and can achieve the same technical effects. Details will not be repeated here to avoid repetition.

It should be understood that the chip mentioned in this embodiment of this application may also be referred to as a system level chip, a system chip, a chip system, an on-chip system chip, or the like.

An embodiment of this application further provides a computer program/program product, where the computer program/program product is stored in a non-transient storage medium, and the program/program product is executed by at least one processor to implement the above UE capability change method embodiment and can achieve the same technical effects. Details will not be repeated here to avoid repetition.

It should be noted that in this application, the terms "include", "comprise", or any other variants thereof are intended to encompass non-exclusive inclusions, such that a process, method, article or apparatus that includes a series of elements not only includes those elements, but also includes other elements that are not explicitly listed, or also includes elements inherent to such a process, method, article or apparatus. Without more restrictions, the element defined by the sentence "include one ..." does not exclude that there are other identical elements in a process, method, article or apparatus including the element. In addition, it should be noted that the scope of the methods and apparatuses in the implementations of this application is not limited to perform functions in the order shown or discussed, but may also include performing functions in a substantially simultaneous manner or in an opposite order according to the functions involved. For example, the described method may be implemented in an order different from the described order, and the steps may be added, omitted or combined. In addition, features described with reference to some examples may be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions in this application essentially, or the part contributing to the prior art, may be presented in the form of a computer software product. The computer software product is stored in a storage medium (such as an ROM/RAM, a magnetic disk, or an optical disc) including several instructions to apply a terminal (which may be a mobile phone, a computer, a server, an air conditioner, a network device, or the like) to perform the methods described in the embodiments of this application.

The embodiments of this application are described above with reference to the accompanying drawings. However, this application is not limited to the above specific implementations. The above specific implementations are illustrative instead of limitative. Enlightened by this application, those of ordinary skill in the art can make many forms without departing from the idea of this application and the scope of protection of the claims. All of the forms fall within the protection of this application.

## Claims

1. A user equipment (UE) capability change method, comprising:
determining, by UE, that a capability change is required and/or configuration preference;
sending, by the UE, a first request message, wherein the first request message is used for requesting a network-side device for the capability change and/or is used for sending configuration preference; and
executing, by the UE, corresponding processing based on a response of the network-side device.

2. The method according to claim 1, wherein the first request message carries at least one of the following information:
configuration preference information, wherein the configuration preference information is used for indicating expected configuration of the UE;
capability change requirement information, wherein the capability change requirement information is used for indicating that the UE requires a capability change;
reconfiguration indication information, wherein the reconfiguration indication information is used for indicating that the network-side device needs to reconfigure the UE, or the reconfiguration indication information is used for indicating that the network-side device does not need to reconfigure the UE; and
target indication information, wherein the target indication information is used for indicating that the first request message is to request a capability change and/or send configuration preference for a multi-SIM purpose.

3. The method according to claim 2, wherein the configuration preference information comprises at least one of the following:
a configuration upper limit;
time information of the configuration preference, wherein the time information comprises one of the following: duration, cycle and start time;
cyclical configuration switching request information; and
multi-SIM configuration preference indication information, wherein the multi-SIM configuration preference indication information indicates that the configuration preference information is used for a multi-SIM.

4. The method according to claim 1, wherein the first request message is carried via one of the following messages:
a UE assistance information message;
a UE capability information message; and
a radio resource control (RRC) connection setup complete message.

5. The method according to claim 4, wherein the RRC connection setup complete message carries first capability information of the UE, wherein the first capability information is different from second capability information, the second capability information is the most recently reported capability information of the UE, or the second capability information is the capability information reported during the UE registering a network, or the second capability information is the maximum capability information of the UE.

6. The method according to claim 5, wherein the capability information of the UE is the first capability information during a period in an RRC connected state corresponding to the RRC connection setup complete message.

7. The method according to any one of claims 1 to 6, wherein the executing, by the UE, corresponding processing based on a response of the network-side device comprises:
monitoring, by the UE, a response message sent from the network-side device; and
executing, by the UE, the corresponding processing based on the response message in a case that the response message is detected.

8. The method according to claim 7, wherein the response message is an RRC reconfiguration message; or, the response message carries at least one of the following information:
acceptance information, wherein the acceptance information indicates that the network-side device accepts the first request message; and
reconfiguration information.

9. The method according to claim 8, wherein the executing, by the UE, the corresponding processing based on the response message comprises at least one of the following:
applying, by the UE, the requested capability change and/or the sent configuration preference in a case that the response message carries the acceptance information;
executing, by the UE, a reconfiguration process based on the reconfiguration information or the RRC reconfiguration message in a case that the response message carries the reconfiguration information or the response message is the RRC reconfiguration message; and
applying the capability change requested and/or configuration preference sent by the UE to take effect in a case that the response message is received.

10. The method according to claim 7, wherein the monitoring, by the UE, a response message sent from the network-side device comprises:
starting, by the UE, a first timer after sending the first request message, wherein a duration of the first timer is configured by a first configuration message, or the duration of the first timer is predefined; and
monitoring, by the UE, the response message sent from the network-side device during the duration of the first timer.

11. The method according to claim 10, wherein the starting, by the UE, a first timer comprises:
starting, by the UE, the first timer after sending the first request message in a case of determining that the network-side device needs to perform reconfiguration.

12. The method according to claim 10, wherein the UE is not allowed to send the first request message again during the duration of the first timer; or, the UE is not allowed to send a second request message for requesting a capability change and/or sending configuration preference during the duration of the first timer, the second request message being different from the first request message.

13. The method according to claim 10, wherein after the first timer is started, the method further comprises:
stopping, by the UE, the first timer during the duration of the first timer in one of the following situations:
the response message sent from the network-side device is received; and
the response message sent from the network-side device is received, and the response message satisfies the configuration preference of the UE.

14. The method according to claim 13, wherein the executing, by the UE, corresponding processing based on a response of the network-side device further comprises:
performing, by the UE, a first operation in a case that the first timer expires.

15. The method according to claim 10, wherein the executing the corresponding processing based on the response message comprises one of the following:
performing, by the UE, a second operation in a case that the response message satisfies the configuration preference of the UE;
stopping, by the UE, the first timer, and performing the first operation in a case that the response message does not satisfy the configuration preference of the UE and the first timer is working; and
performing, by the UE, the first operation after the first timer expires in a case that the response message does not satisfy the configuration preference of the UE and the first timer is working.

16. The method according to claim 15, wherein the second operation comprises at least one of the following:
stopping, by the UE, the first timer in a case that the first timer is working;
performing, by the UE, a reconfiguration process based on the response message; and
performing, by the UE, network switching after the reconfiguration process is completed.

17. The method according to claim 14 or 15, wherein the first operation comprises at least one of the following:
applying a preference configuration and/or capability change of the UE;
applying the configuration and/or capability corresponding to the first request message;
deactivating a secondary cell group (SCG) connection;
releasing the SCG connection;
reducing a number of multiple input multiple output (MIMO) layers;
reducing a number of downlink carriers;
reducing a number of uplink carriers;
resending the first request message; and
performing a network switching operation.

18. The method according to claim 7, wherein before the sending, by the UE, a first request message, the method further comprises:
receiving a first configuration message sent from the network-side device, wherein the first configuration message is used for indicating that the UE is allowed to send the first request message.

19. The method according to claim 18, wherein the first configuration message comprises at least one of the following information:
first indication information, wherein the first indication information indicates that the configuration preference and/or capability change of a terminal is supported; and
a duration of a first timer.

20. The method according to claim 19, wherein the first configuration message is sent via one of the following messages:
a system information (SI) message; and
an RRC reconfiguration message.

21. A UE capability change method, comprising:
receiving, by a network-side device, a first request message sent from UE, wherein the first request message is used for requesting a capability change and/or sending configuration preference by the UE; and
responding, by the network-side device, to the first request message.

22. The method according to claim 21, wherein the first request message carries at least one of the following information:
configuration preference information, wherein the configuration preference information is used for indicating expected configuration of the UE;
capability change requirement information, wherein the capability change requirement information is used for indicating that the UE requires a capability change;
reconfiguration indication information, wherein the reconfiguration indication information is used for indicating that the network-side device needs to reconfigure the UE, or the reconfiguration indication information is used for indicating that the network-side device does not need to reconfigure the UE; and
target indication information, wherein the target indication information is used for indicating that the first request message is to request a capability change and/or send configuration preference for a multi-SIM purpose.

23. The method according to claim 21, wherein the configuration preference information comprises at least one of the following:
a configuration upper limit;
time information of the configuration preference, wherein the time information comprises one of the following: duration, cycle and start time;
cyclical configuration switching request information; and
multi-SIM configuration preference indication information, wherein the multi-SIM configuration preference indication information indicates that the configuration preference information is used for a multi-SIM.

24. The method according to claim 21, wherein the first request message is carried via one of the following messages:
a UE assistance information message;
a UE capability information message; and
a radio resource control (RRC) connection setup complete message.

25. The method according to claim 24, wherein the RRC connection setup complete message carries first capability information of the UE, wherein the first capability information is different from second capability information, the second capability information is the most recently reported capability information of the UE, or the second capability information is the capability information reported during the UE registering a network, or the second capability information is the maximum capability information of the UE.

26. The method according to claim 25, wherein the capability information of the UE is the first capability information during a period in an RRC connected state corresponding to the RRC connection setup complete message.

27. The method according to any one of claims 21 to 26, wherein the responding, by the network-side device, to the first request message comprises:
sending, by the network-side device, a response message to the UE, or sending an RRC reconfiguration message to the UE based on the first request message, wherein the response message carries at least one of the following information:
acceptance information, wherein the acceptance information indicates that the network-side device accepts the first request message; and
reconfiguration information.

28. The method according to any one of claims 21 to 26, wherein before the receiving, by a network-side device, a first request message sent from UE, the method further comprises:
sending a first configuration message to the UE, wherein the first configuration message is used for indicating whether the UE is allowed to send the first request message.

29. The method according to claim 28, wherein the first configuration message comprises at least one of the following information:
first indication information, wherein the first indication information indicates that the configuration preference and/or capability change of a terminal is supported; and
a duration of a first timer.

30. The method according to claim 29, wherein the first configuration message is sent via one of the following messages:
a system information (SI) message; and
an RRC reconfiguration message.

31. A UE capability change apparatus, comprising:
a determining module, configured to determine that UE requires a capability change and/or sends configuration preference;
a first sending module, configured to send a first request message, wherein the first request message is used for requesting a network-side device for the capability change and/or is used for sending configuration preference; and
an execution module, configured to execute corresponding processing based on a response of the network-side device.

32. The apparatus according to claim 31, wherein the executing, by the execution module, corresponding processing based on the response of the network-side device comprises:
monitoring a response message sent from the network-side device; and
executing the corresponding processing based on the response message in a case that the response message is detected.

33. The apparatus according to claim 32, wherein the response message is a radio resource control (RRC) reconfiguration message; or, the response message carries at least one of the following information:
acceptance information, wherein the acceptance information indicates that the network-side device accepts the first request message; and
reconfiguration information.

34. The apparatus according to claim 33, wherein the executing, by the execution module, the corresponding processing based on the response message comprises at least one of the following:
applying, by the UE, the requested capability change and/or the sent configuration preference in a case that the response message carries the acceptance information;
executing, by the UE, a reconfiguration process based on the reconfiguration information or the RRC reconfiguration message in a case that the response message carries the reconfiguration information or the response message is the RRC reconfiguration message; and
applying the capability change requested and/or the configuration preference sent by the UE to take effect in a case that the response message is received.

35. The apparatus according to claim 32, wherein the monitoring, by the execution module, the response message sent from the network-side device comprises:
starting a first timer after sending the first request message, wherein a duration of the first timer is configured by a first configuration message, or the duration of the first timer is predefined; and
monitoring the response message sent from the network-side device during the duration of the first timer.

36. The apparatus according to claim 35, wherein the starting, by the execution module, the first timer comprises:
starting the first timer after sending the first request message in a case of determining that the network-side device needs to perform reconfiguration.

37. The apparatus according to claim 35, wherein the execution module is further configured to stop the first timer during the duration of the first timer in one of the following situations:
the response message sent from the network-side device is received; and
the response message sent from the network-side device is received, and the response message satisfies the configuration preference of the UE.

38. The apparatus according to claim 35, wherein the executing, by the execution module, the corresponding processing based on the response of the network-side device further comprises:
performing, by the UE, a first operation in a case that the first timer expires.

39. The apparatus according to claim 32, wherein the executing, by the execution module, the corresponding processing based on the response message comprises one of the following:
performing a second operation in a case that the response message satisfies the configuration preference of the UE;
stopping the first timer and performing the first operation in a case that the response message does not satisfy the configuration preference of the UE and the first timer is working; and
performing the first operation after the first timer expires in a case that the response message does not satisfy the configuration preference of the UE and the first timer is working.

40. The apparatus according to claim 39, wherein the second operation comprises at least one of the following:
stopping, by the UE, the first timer in a case that the first timer is working;
performing, by the UE, a reconfiguration process based on the response message; and
performing, by the UE, network switching after the reconfiguration process is completed.

41. The apparatus according to claim 39 or 40, wherein the first operation comprises at least one of the following:
applying a preference configuration and/or capability change of the UE;
applying the configuration and/or capability corresponding to the first request message;
deactivating a secondary cell group (SCG) connection;
releasing the SCG connection;
reducing a number of multiple input multiple output (MIMO) layers;
reducing a number of downlink carriers;
reducing a number of uplink carriers;
resending the first request message; and
performing a network switching operation.

42. The apparatus according to claim 31, wherein the apparatus further comprises: a first receiving module, configured to receive a first configuration message sent from the network-side device, wherein the first configuration message is used for indicating whether the UE is allowed to send the first request message.

43. A UE capability change apparatus, comprising:
a second receiving module, configured to receive a first request message sent from UE, wherein the first request message is used for requesting a capability change and/or sending configuration preference by the UE; and
a response module, configured to respond to the first request message.

44. The apparatus according to claim 43, wherein the responding, by the response module, to the first request message comprises:
sending a response message to the UE or sending an RRC reconfiguration message to the UE based on the first request message, wherein the response message carries at least one of the following information:
acceptance information, wherein the acceptance information indicates that the network-side device accepts the first request message; and
reconfiguration information.

45. The apparatus according to claim 43 or 44, wherein the apparatus further comprises:
a second sending module, configured to send a first configuration message to the UE, wherein the first configuration message is used for indicating whether the UE is allowed to send the first request message.

46. A terminal, comprising a processor, a memory, and a program or instruction stored on the memory and executable on the processor, the program or instruction, when executed by the processor, implementing steps of the UE capability change method according to any one of claims 1 to 20.

47. A network-side device, comprising a processor, a memory, and a program or instruction stored on the memory and executable on the processor, the program or instruction, when executed by the processor, implementing steps of the UE capability change method according to any one of claims 21 to 30.

48. A readable storage medium, a program or instruction being stored on the readable storage medium, the program or instruction, when executed by a processor, implementing steps of the UE capability change method according to any one of claims 1 to 20, or implementing steps of the UE capability change method according to any one of claims 21 to 30.
